# EUROPEAN PATENT SPECIFICATION

(11) **EP 4 074 524 B1**
(45) Date of publication and mention of the grant of the patent: **07.08.2024**
(21) Application number: 20900369.8
(22) Date of filing: 17.11.2020
(51) Int. Cl.: B60C 15/06, B60C 17/00, B60C 13/00

(54) **RUN-FLAT TIRE**
NOTLAUFREIFEN
PNEU À ROULAGE À PLAT

(30) Priority: 11.12.2019 JP 2019223434
(43) Date of publication of application: 19.10.2022
(73) Proprietor: Toyo Tire Corporation, Itami-shi, Hyogo 664-0847 (JP)
(72) Inventor: INUI Yusuke, Itami-Shi, Hyogo 664-0847 (JP)
(74) Representative: Müller-Boré & Partner Patentanwälte PartG mbB
(86) International application number: PCT/JP2020/042724
(87) International publication number: WO 2021/117424

(56) References cited:
- EP-A1- 0 545 681
- EP-A1- 1 388 436
- EP-A1- 3 189 987
- JP-A- 2013 154 819
- JP-A- 2017 121 888
- JP-A- 2019 064 485

## Description

### TECHNICAL FIELD

The present invention relates to a run-flat tire of side-reinforcement type in which a reinforcement rubber layer is arranged at the sidewall.

### BACKGROUND ART

Conventionally, a run-flat tire of side-reinforcement type arranging a reinforcement rubber layer at the sidewall has been known. This reinforcement rubber layer has a function of preventing a tire from becoming completely flat, even in the case of the internal pressure of the tire declining. Consequently, a run-flat tire is able to perform run-flat travel (travel in a state with the internal pressure of the tire declined) of a certain distance, by including this reinforcement rubber layer. For example, Patent Document 1 discloses a run-flat tire in which the proportion of a gauge of a side reinforcement layer (reinforcement rubber layer) accounting for the total gauge of the sidewall part is set to a predetermined proportion, in order to achieve both the ride quality performance during normal travel and the run-flat performance under a condition of high load factor. In addition, Patent Document 2 discloses a run-flat tire in which the length between the tire-radial direction inner end of the reinforcement rubber layer and tire radial direction outer end of the bead filler is set to at least 10 mm, in order to improve the ride comfort during normal internal pressure travel, without harming the durability during run-flat travel (run-flat durability).

Patent Document 1: Japanese Unexamined Patent Application, Publication No. 2015-16765
Patent Document 2: Japanese Unexamined Patent Application, Publication No. 2012-192853

EP 1 388 436 A1 describes a pneumatic radial ply runflat tire comprising a tread cap, two inextensible annular beads, a carcass comprising a radial ply structure, a gas-impervious inner liner, a belt structure located between the tread cap and the radial ply structure, two sidewalls each of which is reinforced with one or more wedge inserts, a pair of transition regions wherein the tread cap smoothly transitions into each sidewall, a pair of bead filler apexes, and a pair of chafers that protect the underlying ply structure from abrasion against a wheel rim having a rim flange.

EP 0 545 681 A1 describes a pneumatic safety tyre suitable for high speed sport use which is improved in run flat performance without sacrificing high speed running performance.

EP 3 189 987 A1 describes a pneumatic tire having improved pinch cut resistance and run-flat durability with favorable ride comfort during normal running being maintained.

### SUMMARY

### OF THE INVENTION

### Problems to be Solved by the Invention

In the case of a run-flat tire shown in Patent Document 1, since the relationship between the bead filler and side reinforcement layer is not defined, local deformation occurs in particular in the vicinity of the bead filler during run-flat travel, and there is a possibility of no longer being able to sufficiently ensure run-flat resistance. In addition, in the case of the run-flat tire shown in Patent Document 2, for example, when setting the length between the tire-radial direction inner end of the reinforcement rubber layer and tire radial direction outer end of the bead filler to on the order of 10 mm, local deformation occurs during run-flat travel, and there is a possibility of no longer being able to sufficiently ensure run-flat resistance. In the case of these configurations, particularly in the case of a run-flat tire having large tire cross-sectional height as in a tire for SUVs, local deformation tends to occur during run-flat travel.

The present invention has been made in view of the above-mentioned problems, and an object thereof is to provide a run-flat tire which can suppress local deformation even during run-flat travel, and improve run-flat resistance. The present invention is defined by the independent claim. Further aspects are defined in the dependent claims.

### Means for Solving the Problems

The invention relates to a run-flat tire (for example, the tire 1) according to claim 1 which includes: a pair of beads (for example, the beads 11); a pair of sidewalls (for example, the sidewalls 12) extending from each of the pair of beads to an outer side in a tire-radial direction; a tread (for example, the tread 13) disposed between the pair of sidewalls; and a reinforcement rubber layer (for example, the reinforcement rubber layer 50) disposed at the sidewall; in which the bead includes a bead core (for example, the bead core 21) and a bead filler (for example, the bead filler 22) extending to an outer side in the tire-radial direction of the bead core, part of the reinforcement rubber layer is disposed at an inner side in a tire-width direction of the bead filler, and, in a tire-width direction cross-sectional view, a tire-radial direction length (for example, the tire-radial direction length Hb) from a tire-radial direction outside end (for example, the tire-radial direction outside end 22A) of the bead filler until a tire-radial direction inside end (for example, the tire-radial direction inside end 50B) of the reinforcement rubber layer is at least 70% of a tire-radial direction length (for example, the tire-radial direction length Ha) from the tire-radial direction outside end of the bead filler until the tire-radial direction inside end (for example, the tire-radial direction inside end 22B) of the bead filler, and a variation range of a total thickness summing a thickness of the bead filler and a thickness of the reinforcement rubber layer, within a range from the tire-radial direction outside end of the bead filler to the tire-radial direction inside end of the reinforcement rubber layer is within 10%, wherein length in a tire radial direction from a rim base line (for example, the rim base line BL) until a surface of the tread is at least three times a tire-radial direction length from the rim base line until the tire-radial direction outside end of the bead filler.

Additionally, the run-flat tire may further include: a carcass ply (for example, the carcass ply 23) bridged between the pair of beads, in which rim strip rubber (for example, the rim strip rubber 32) and sidewall rubber (for example, sidewall rubber 30) arranged at an outer side in the tire-radial direction of the rim strip rubber are disposed at an outer side in the tire-width direction of the carcass ply in the bead and the sidewall, and a tire-radial direction outside end (for example, the tire-radial direction outside end 32A) of the rim strip rubber is disposed more to an outer side in the tire-radial direction than the tire-radial direction outside end of the bead filler.

### Effects of the Invention

According to the present invention, it is possible to provide a run-flat tire which can suppress local deformation even during run-flat travel, and improve run-flat resistance.

### BRIEF DESCRIPTION OF THE DRAWINGS

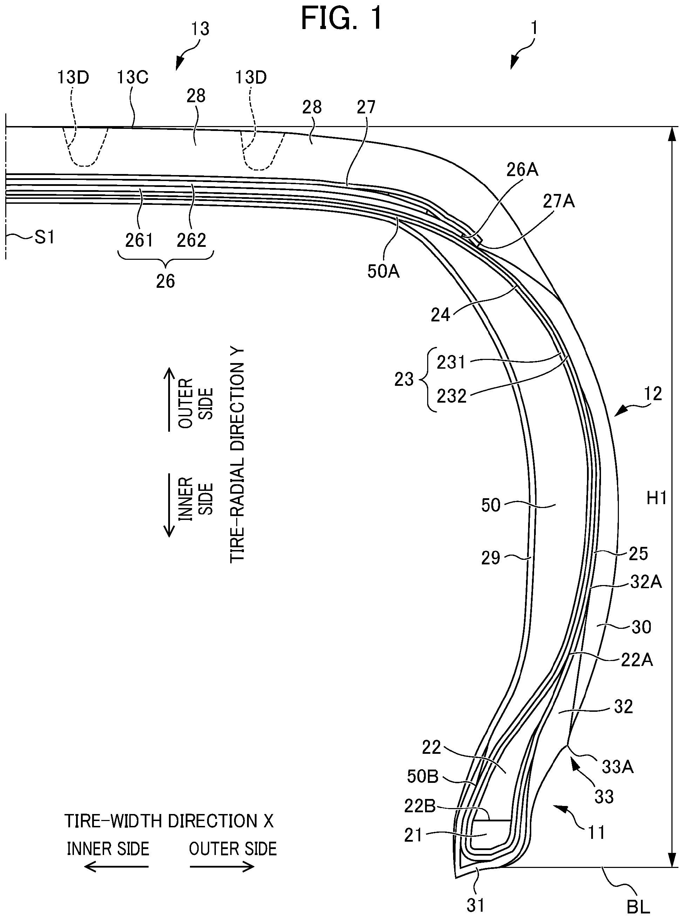

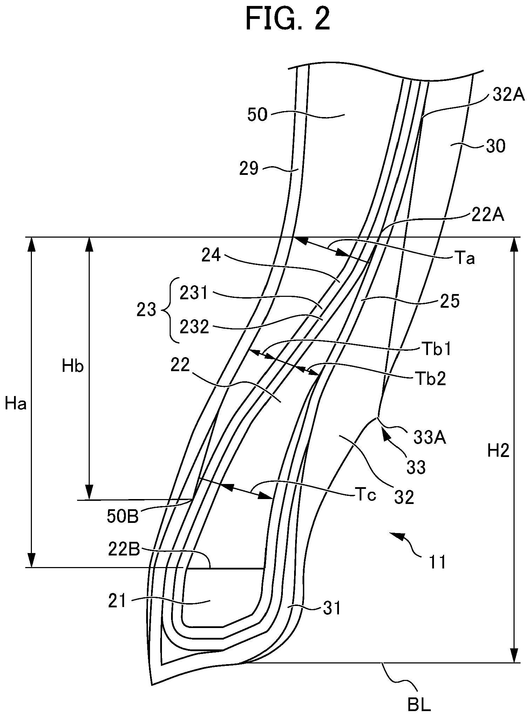

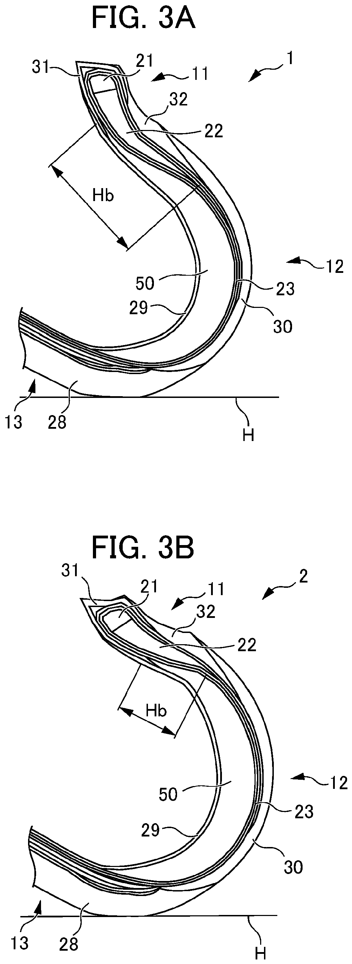

FIG. 1 is a view showing a half section in a tire-width direction of a run-flat tire according to the present invention; FIG. 2 is a partially enlarged cross-sectional view of the run-flat tire of FIG.1; FIG. 3A is a view schematically showing a partial cross section in a tire-width direction during zero internal pressure of the run-flat tire of the present invention; and FIG. 3B is a view schematically showing a partial cross section in a tire-width direction during zero internal pressure of a run-flat tire of a comparative example.

### PREFERRED MODE FOR CARRYING OUT THE INVENTION

Hereinafter, the present invention will be explained while referencing the drawings. FIG. 1 is a view showing a half section in a tire-width direction of a tire 1 which is a run-flat tire according to the present invention Since the specific structure of the tire 1 is left-right symmetrical in a cross section in the tire-width direction, a cross section of the right half is shown herein. In the drawings, reference number S1 is a tire equatorial plane. The tire equatorial plane S1 is a plane intersecting a tire rotational axis (tire meridian axis), and is positioned at the center in the tire-width direction. Herein, tire-width direction is a direction parallel to the tire rotational axis, and is the left-right direction in the paper plane of the cross-sectional view of FIG. 1. In FIG. 1, it is illustrated as the tire-width direction X. Then, tire-width direction inner side is a direction near the tire equatorial plane S1, and is the left side in the paper plane of FIG. 1. Tire-width direction outer side is a direction distanced from the tire equatorial plane S1, and is the right side in the paper plane of FIG. 1. In addition, tire-radial direction is a direction perpendicular to the tire rotational axis, and is the vertical direction in FIG. 1. In FIG. 1, it is illustrated as the tire-radial direction Y. Then, a tire-radial direction outer side is a direction distanced from the tire rotational axis, and is a upper side in the paper plane of FIG. 1. Tire-radial direction inner side is a direction approaching the tire rotational axis, and is an lower side in the paper plane of FIG. 1. It should be noted that the cross-sectional view of FIG. 1 is a tire-width direction cross-sectional view (tire meridian axis cross-sectional view) in an unloaded state mounting the tire to a standard rim, and filling with standard internal pressure. It should be noted that standard rim indicates a rim serving as a standard decided by JATMA corresponding to the tire size. In addition, standard internal pressure is 180 kPa in the case of the tire being for a passenger vehicle, for example. It should be noted that the same also applies for FIG. 2 described later.

The tire 1 is a run-flat tire for passenger cars, for example, and includes a pair of beads 11 provided at both sides in the tire-width direction, sidewalls 12 extending from each of the beads 11 to the outer side in the tire-radial direction, and tread 13 configuring a tire tread (contact patch with road surface R) 13C extending to the outer side in the tire-radial direction of each of the sidewalls 12.

The bead 11 includes a bead core 21, and bead filler 22 extending to the outer side in the tire-radial direction of the bead core 21. The bead core 21 is an annular member formed by wrapping around several times bead wires made of metal coated with rubber, and is a member which plays a role of fixing the tire 1 filled with air to the rim (not shown) of a wheel. The bead filler 22 is a rubber member of tapered tip shape, extending to the outer side in the tire-radial direction of the bead core 21. The bead filler 22 is a member provided in order to raise the rigidity of the bead peripheral part and to ensure high maneuverability and stability. The bead filler 22 is configured by rubber of higher hardness than the surrounding rubber members, for example.

A carcass ply 23 bridging between the pair of beads 11 is embedded inside of the tire 1. The carcass ply 23 configures a ply serving as the backbone of the tire 1, and is embedded within the tire 1, in a form passing through the pair of sidewalls 12 and the tread 13 between the pair of beads 11. The carcass ply 23 includes the ply body 24 which extends from one bead core 21 to the other bead core 21 and exists between the tread 13 and bead 11; and the ply folding part 25 which is folded back around the bead core 21. In the present embodiment, the ply folding part 25 is overlapped with the ply body 24. The carcass ply 23 is configured by a plurality of ply cords extending in the tire-width direction. In addition, a plurality of ply cords is arranged side by side in a tire circumferential direction. This ply cord is configured by an insulative organic fiber cord such as polyester or polyamide, or the like, and is covered by topping rubber. It should be noted that the carcass ply 23 of the present embodiment is configured by two layers of carcass ply in which a first carcass ply 231 and second carcass ply 232 are overlapped; however, the carcass ply 23 may be one layer, or may be three or more layers.

The bead 11 further includes a chamfer 31, and rim strip rubber 32 arranged at the outer side in the tire-width direction of the chamfer 31. The chamfer 31 is provided on the inner side in the tire-radial direction of the carcass ply 23 provided around the bead core 21. The chamfer 31 also extends to the outer side in the tire-width direction of the ply folding part 25 of the carcass ply 23. The rim strip rubber 32 is arranged at the outer side in the tire-width direction of the chamfer 31 and carcass ply 23, and is a portion contacting with the rim (not shown) when rim mounted.

The sidewall 12 includes a reinforcement rubber layer 50 arranged at the inner side in the tire-width direction of the carcass ply 23, and sidewall rubber 30 arranged at the outer side in the width direction of the carcass ply 23. The reinforcement rubber layer 50 is a substantially crescent-moon shaped side reinforcement rubber in a tire-width direction cross-sectional view (tire meridian axis cross-sectional view). This reinforcement rubber layer 50 has a function of preventing the tire 1 from becoming completely flat, even in a case of the internal pressure of the tire 1 declining. The sidewall rubber 30 is a rubber member configuring the outer wall surface of the tire 1. This side-wall rubber 30 is a portion which bends the most upon the tire 1 exhibiting a cushioning action, and usually flexible rubber having fatigue resistance is adopted therein.

The tread 13 includes a steel belt 26 arranged on the outer side in the tire-radial direction of the carcass ply 23, a cap ply 27 arranged on the outer side in the tire-radial direction of the steel belt 26, and tread rubber 28 arranged on the outer side in the tire-radial direction of the cap ply 27. The steel belt 26 is configured by a plurality of steel cords covered by rubber. By providing the steel belts 26, the rigidity of the tire 1 is ensured, and the contact state of the road surface with the tread 13 improves. In the present embodiment, the two-layer structure steel belt (steel belt 261 on the inner side and steel belt 262 on the outer side) is provided; however, the number of steel belts 26 layered is not limited thereto. The cap ply 27 is a member arranged at the outer side in the tire-radial direction of the steel belt 26, and has a function as a belt reinforcement layer. The cap ply 27 is configured by an insulative organic fiber layer such as polyamide fiber, and is covered by topping rubber. By providing the cap ply 27, it is possible to achieve an improvement in durability and reduction in road noise while traveling. In the present embodiment, the tire-width direction outside end 27A of the cap ply 27 extends more to the outer side in the tire-width direction than the tire-width direction outside end 26A of the steel belt 26. In the two-layer structure steel belt 26 of the present embodiment, the steel belt 261 on the inner side is wider than the steel belt 262 on the outer side, and thus the tire-width direction outside end 26A of the steel belt 26 is configured by the tire-width direction outside end of the steel belt 261 on the inner side. The tread rubber 28 is a member configuring the tire tread (contact patch with road surface R) 13C during normal travel. The tread pattern 13D configured by a plurality of grooves is provided in the tire tread 13C of the tread rubber 28.

In the bead 11, sidewall 12 and tread 13, an inner liner 29 as a rubber layer configuring the inner wall surface of the tire 1 is provided to the tire inner cavity side of the carcass ply 23 and reinforcement rubber layer 50. The inner liner 29 mainly covers the inner surface of the carcass ply 23 in the tread 13, and mainly covers the inner surface of the reinforcement rubber layer 50 in the sidewall 12 and bead 11. The inner liner 29 is configured by air permeation resistant rubber, whereby the air inside the tire inner cavity is prevented from leaking to outside.

Herein, as shown in FIG. 1, the sidewall rubber 30 of the sidewall 12 extends towards the tread 13. On the other hand, the tread rubber 28 of the tread 13 extends towards the sidewall 12. As a result thereof, the tread rubber 28 and sidewall rubber 30 enter a layered state, on the tire outer surface side of a partial region of the carcass ply 23. In more detail, in a region in which the sidewall rubber 30 and tread rubber 28 both exist, i.e. transition region of the sidewall 12 and tread 13, the sidewall rubber 30 and tread rubber 28 are in a layered state in order, on the tire outer surface side of the carcass ply 23.

In addition, in the vicinity of the transition region of the bead 11 and sidewall 12, the rim strip rubber 32 and sidewall rubber 30 are in a layered state in order, on the tire outer surface side of the carcass ply 23. In addition, a rim protector 33 which has an apex part 33A projecting to the outer side in the tire-width direction and continuously extends in a ring shape in the tire-circumferential direction is provided in this transition region vicinity. In the present embodiment, the apex part 33A of the rim protector 33 is provided to the rim strip rubber 32. The rim protector 33 has a function of protecting the rim (not shown) from external injury.

In addition, in the bead 11, the reinforcement rubber layer 50 and chamfer 31 are in a layered state in order, on the tire inner cavity side of the carcass ply 23. The inner liner 29 further covers the tire inner cavity side of these rubber members.

In this way, the tire 1 of the present invention includes the pair of bead 11, the pair of sidewalls 12 extending from each of the pair of beads 11 to the outer side in the tire-radial direction, and the tread 13 arranged between the pair of sidewalls 12. Then, in the tire 1 of the present invention, by the relationship between the reinforcement layer 50 arranged at the sidewall 12 and the bead filler 22 provided at the bead 11 being set in a relationship such as that explained below, local deformation even during run-flat travel is suppressed, and superior run-flat durability is realized.

FIG. 2 is an enlarged cross-sectional view in the periphery in a tire-radial direction inside region of the bead 11 and reinforcement rubber layer 50 of the tire 1 in FIG. 1.

As shown in FIG. 2, part of the tire-radial direction inside region of the reinforcement rubber layer 50 is arranged at the inner side in the tire-width direction of the bead filler 22. Then, in a tire-width direction cross-sectional view (tire meridian axis cross-sectional view) shown in FIG. 2, a tire-radial direction length Hb (overlap length Hb) from the tire-radial direction outside end 22A of the bead filler 22 until the tire-radial direction inside end 50B of the reinforcement rubber layer 50 becomes at least 70% of the tire-radial direction length Ha (bead filler height Ha) from the tire-radial direction outside end 22A of the bead filler 22 until the tire-radial direction inside end 22B. The bead filler 22 and reinforcement rubber layer 50 are configured from rubber members of higher hardness than at least the sidewall rubber 30 and inner liner 29. Preferably, the bead filler 22 and reinforcement rubber layer 50 are configured from rubber members of higher hardness than the rim strip rubber 32. In other words, the bead filler 22 and reinforcement rubber layer 50 are configured from rubber members of higher hardness than the surrounding rubber members. Then, by setting the overlap length Hb to at least 70% of the bead filler height Ha, it is possible to suppress local deformation from occurring in the bead filler vicinity such as the vicinity of the rim mounting part during run-flat travel.

Furthermore, in the present invention, the variation range in the total thickness obtained by summing the thickness of the bead filler 22 and thickness of the reinforcement rubber layer 50, within a range from the tire-radial direction outside end 22A of the bead filler 22 until the tire-radial direction inside end 50B of the reinforcement rubber layer 50 (within range of overlap length Hb) becomes within 10%.

Thickness referred to herein is the member penetrating distance in a direction orthogonal to the tire-width direction inside surface (tire inner cavity surface) of the reinforcement rubber layer 50, in the tire-width direction cross-sectional view. Then, the total thickness obtained by summing the thickness of the bead filler 22 and thickness of the reinforcement rubber layer 50 is a value obtained by adding (totaling) the thickness of the reinforcement rubber layer 50 (distance from tire-width direction inside surface until tire-width direction outside surface of reinforcement rubber layer 50) and the thickness of the bead filler 22 (distance from tire-width direction inside surface until tire-width direction outside surface of bead filler 22). In other words, the total thickness obtained by summing the thickness of the bead filler 22 and the thickness of the reinforcement rubber layer 50 is a distance arrived at by subtracting the thickness of another member sandwiched between the bead filler 22 and reinforcement rubber 50, i.e. carcass ply 23 in the present embodiment, from the distance from the tire-width direction inside surface of the reinforcement rubber layer 50 until the tire-width direction outside surface of the bead filler 22.

For example, when specifically explaining using FIG. 2, the total thickness in the vicinity of the tire-radial direction outside end 22A of the bead filler 22 is generally a thickness Ta of the reinforcement rubber layer 50. The total thickness in the vicinity of an intermediate region of the tire-radial direction outside end 22A of the bead filler 22 and the tire-radial direction inside end 50B of the reinforcement rubber layer 50 is a thickness Tb1+Tb2 adding the thickness Tb1 of the reinforcement rubber layer 50 and thickness Tb2 of the bead filler 22. The total thickness in the vicinity of the tire-radial direction inside end 50B of the reinforcement rubber layer 50 is generally the thickness Tc of the bead filler 22. Then, even when comparing the total thickness of these three locations, the variation range thereof is small, and within 10%. Then, not limiting to these three locations, the variation range of the total thickness obtained by summing the thickness of the bead filler 22 and the thickness of the reinforcement rubber layer 50 within a range from the tire-radial direction outside end 22A of the bead filler 22 until the tire-radial direction inside end 50B of the reinforcement rubber layer 50 (within range of overlap length Hb) becomes within 10%.

It should be noted that, in the case of a fixed number of plies being sandwiched between the bead filler 22 and reinforcement rubber layer 50, the thickness including the thickness of sandwiched plies (in the present embodiment, thicknesses of first carcass ply231 and second carcass ply 232) may be handled as the total thickness obtained by summing the thickness of the actual aforementioned bead filler 22 and thickness of the reinforcement rubber layer 50, and the variation range of the total thickness within the range of the overlap length Hb at this time may be set as within 10%.

In this way, by fixing the total thickness obtained by summing the thickness of the bead filler 22 and thickness of the reinforcement rubber layer 50 to within the range of the overlap length Hb, specifically, by setting the variation range of the total thickness to within 10%, it is possible to suppress the local deformation from occurring in the vicinity of the bead filler such as the vicinity of the rim mounting part during run-flat travel.

It should be noted that, by setting the overlap length Hb to at least 70% of the bead filler height Ha, while securing the total thickness summing the thickness of the bead filler 22 and the thickness of the reinforcement rubber layer 50 so as to be a certain thickness, setting the variation range of the total width obtained by summing the thickness of the bead filler 22 and the thickness of the reinforcement rubber layer 50 within the range of the overlap length Hb to within 10% becomes simple. For example, in the case of the overlap length Hb being 50%, for example, of the bead filler height Ha, since the bead filler 22 is a tapered tip shape, it is difficult to set the variation range thereof to within 10%, while securing the total thickness obtained by summing the thickness of the bead filler 22 and thickness of the reinforcement rubber layer 50 so as to become a certain thickness.

In the above way, by setting the tire-radial direction length Hb from the tire-radial direction outside end 22A of the bead filler 22 until the tire-radial direction inside end 50B of the reinforcement rubber layer 50 to at least 70% of the tire-radial direction length Ha from the tire-radial direction outside end 22A of the bead filler 22 until the tire-radial direction inside end 22B, and setting the variation range of the total thickness summing the thickness of the bead filler 22 and the thickness of the reinforcement rubber layer 50 within a range from the tire-radial direction outside end 22A of the bead filler 22 to the tire-radial direction inside end 50B of the reinforcement rubber layer 50 to within 10%, it is possible to suppress local deformation from occurring in the vicinity of the rim mounting part, and improve the run-flat durability.

In the present embodiment, further, the tire-radial direction outside end 32A of the rim strip rubber 32 is arranged more to the outer side of the tire-radial direction than the tire-radial direction outside end 22A of the bead filler 22. In other words, in the present embodiment, at the outer side in the tire-width direction of the carcass ply 23 of the bead 11 and sidewall 12, the rim strip rubber 32 and the sidewall rubber 30 arranged at the outer side in the tire-radial direction of the rim strip rubber 32 are arranged; however, the tire-radial direction outside end of this rim strip rubber 32 is arranged more to the outer side in the tire-radial direction than the tire-radial direction outside end of the bead filler 22. It is thereby possible to more effectively suppress local deformation from occurring in the vicinity of the rim mounting part, and further improve run-flat durability.

It should be noted that the carcass ply 23 configured by at least two layers of ply is preferably sandwiched between the bead filler 22 and reinforcement rubber layer 50. It is thereby possible to more effectively suppress local deformation from occurring in the vicinity of the rim mounting part, and further improve run-flat durability.

Herein, as the rubber adopted in the bead filler 22 and reinforcement rubber layer 50, rubber having higher hardness than at least the sidewall rubber 30 and inner liner 29 is used. The hardness of the rubber is a value (durometer hardness) measured by a type-A durometer based on JIS K6253 in a 23°C atmosphere.

For example, when setting the hardness of the sidewall rubber 30 as a reference, the hardness of the bead filler 22 uses rubber of hardness of about 1.2 to 2.3 times the hardness of the sidewall rubber 30, and more preferably about 1.5 to 2 times. In addition, the hardness of the reinforcement rubber layer 50 uses rubber of hardness of about 1.1 to 1.9 times the hardness of the sidewall rubber 30, and more preferably about 1.4 to 1.7 times. Furthermore, the hardness of the rim strip rubber 32 uses rubber of hardness of about 1 to 1.6 times the hardness of the sidewall rubber 30, and more preferably about 1.3 to 1.4 times. Then, the hardness of the bead filler 22 and the hardness of the reinforcement rubber layer 50 are preferably values as close as possible, for example, the hardness of the bead filler 22 is a hardness within +/-20%, more preferably within +/-15%, based on the hardness of the reinforcement rubber layer 50. More specifically, the hardnesses of the bead filler 22 and reinforcement rubber layer 50 are both higher than the hardness of the sidewall rubber 30, and the hardness of the sidewall rubber 30 is within the range of 45 to 60 in durometer hardness; whereas, the hardness of the reinforcement rubber layer 50 is within the range of 70 to 85 in durometer hardness, and the hardness of the bead filler 22 is preferably a hardness within +/-20% with reference to the hardness of the reinforcement rubber layer 50. It should be noted that, if the durometer hardness of the reinforcement rubber layer 50 is less than 70, it is difficult to ensure run-flat durability and bead detachment resistance. On the other hand, if the durometer hardness is at least 85, it is difficult to achieve an improvement in ride comfort. By establishing such hardness, it is possible to keep the balance in flexibility as a tire and rigidity in the vicinity of the beads 11, and ensure run-flat durability.

FIG. 3A is a view schematically showing a partial cross section in the tire-width direction upon the tire 1 as the run-flat tire of the present invention making contact with the road surface H during zero internal pressure. FIG. 3B is a view schematically showing a partial cross section in the tire-width direction upon a run-flat tire 2 of side reinforcement type of a comparative example making contact with the road surface H during zero internal pressure. It should be noted that, in FIG. 3A, a road surface H side, i.e. lower side in the paper plane, is a tire-radial direction outer side. The tire during zero internal pressure becomes a crushed state compared to the tire in FIG. 1 in a state filled with the standard internal pressure. Herein, during zero internal pressure indicates a state applying load of 65% of the weight corresponding to the load index, with the internal pressure of the tire being zero.

In the comparative example shown in FIG. 3B, the tire-radial direction length Hb (overlap length Hb) from the tire-radial direction outside end 22A of the bead filler 22 until the tire-radial direction inside end 50B of the reinforcement rubber layer 50 is on the order of 50% of the tire-radial direction length Ha from the tire-radial direction outside end 22A of the bead filler 22 until the tire-radial direction inside end 22B, and sufficient length cannot be secured. In this case, since stress concentration occurs in the vicinity of the bead 11 and the boundary region between the bead 11 and sidewall 12 during zero internal pressure, it greatly deforms in this portion as shown in FIG. 3B. On the other hand, in the tire 1 of the present invention shown in FIG. 3A, the tire-radial direction length Hb (overlap length Hb) from the tire-radial direction outside end 22A of the bead filler 22 until the tire-radial direction inside end 50B of the reinforcement rubber layer 50 is at least 70% of the tire-radial direction length Ha from the tire-radial direction outside end 22A of the bead filler 22 until the tire-radial direction inside end 22B, and a variation range in total thickness obtained by summing thickness of the bead filler 22 and thickness of the reinforcement rubber layer 50, within a range from the tire radial-direction outside end 22A of the bead filler 22 to the tire radial-direction inside end 50B of the reinforcement rubber layer 50 is within 10%. Consequently, in the tire 1 of the present invention, stress concentration hardly occurs in the vicinity of the bead 11 and the boundary region between the bead 11 and the sidewall 12 during zero internal pressure, and deformation at this portion is small, as shown in FIG. 3A. In this way, according to the configuration of the present invention, it is possible to suppress local deformation during run-flat travel, and improve the run-flat durability.

It should be noted that the configuration of the present invention is particularly suitable in a run-flat tire for which the tire cross-sectional height H1 is large, as in a tire for SUVs. Normally, in the case of the tire cross-section height H1 being large, strong stress acts in the vicinity of the rim mounting part of the tire, and local deformation tends to occur. Even in such a case, so long as being the configuration of the present invention, it is possible to suppress local deformation from occurring in the vicinity of the rim mounting part, and thus run-flat durability can be improved. In addition, for the run-flat tire having relative large tire cross-sectional height H1 relative to the tire radial-direction length H2 from the rim base line BL to the tire-radial direction outside end 22A of the bead filler 22, local deformation tends to occur in the vicinity of the rim mounting part; however, the configuration of the present invention can be particularly suitably adopted in such a run-flat tire. For example, even for a tire such that the tire-radial direction length H1 (tire cross-sectional height H1) from the rim base line BL to the tire tread 13C of the tread 13 is at least 3 times the tire radial-direction length H2 from the rim base line BL to the tire-radial direction outside end 22A of the bead filler 22, so long as adopting the configuration of the present invention, it will be possible to suppress local deformation from occurring in the vicinity of the rim mounting part, and improve the run-flat durability. Herein, tire cross-sectional height H1 is the length in the tire-radial direction from the rim base line BL to the tire tread 13C of the tread 13, i.e. 1/2 of the difference between the outside diameter of the tire and the rim diameter.

In addition, the configuration of the present invention is particularly suitable in the case of the tire radial-direction outside end 50A of the reinforcement rubber layer 50 extending to the region of the tread 13. More specifically, it is particularly suitable in the case of the tire radial-direction outside region of the reinforcement rubber layer 50 of crescent-moon shaped cross section being arranged on the inner side in the tire-radial direction of the tire width-direction outside end 26A of the steel belt. In such a case, the rigidity in the vicinity of the shoulder which is the boundary region between the tread 13 and sidewall 12 is high. Therefore, strong stress acts in the vicinity of the rim mounting part of this part of the tire, and local deformation tends to occur. Even in such a case, so long as being the configuration of the present invention, it is possible to suppress local deformation from occurring in the vicinity of the rim mounting part, and thus run-flat durability can be improved.

According to the tire 1 of the present invention, the following effects are exerted.

(1) The tire 1 according to the present invention is a run-flat tire including a pair of beads 11, a pair of sidewalls 12 extending from each of the pair of beads 11 to the outer side in the tire-radial direction, tread 13 arranged between the pair of sidewalls 12, and a reinforcement rubber layer 50 arranged at the sidewall 12, in which the bead 11 includes the bead core 21, and the bead filler 22 extending to the outer side in the tire-radial direction of the bead core 21, part of the reinforcement rubber layer 50 is arranged at the inner side in the tire width direction of the bead filler 22, the tire radial-direction length Hb from the tire radial-direction outside end 22A of the bead filler 22 to the tire radial-direction inside end 50B of the reinforcement rubber layer 50 in a cross-sectional view in the tire width direction is at least 70% of the tire radial-direction length Ha from the tire radial-direction outside end 22A of the bead filler 22 to the tire radial-direction inside end 22B of the bead filler 22, and a variation range in total thickness obtained by summing thickness of the bead filler 22 and thickness of the reinforcement rubber layer 50, within a range from the tire radial-direction outside end 22A of the bead filler 22 to the tire radial-direction inside end 50B of the reinforcement rubber layer 50, is within 10%. It is thereby possible to suppress local deformation even during run-flat travel, and improve run-flat durability. In the case of part being thin relative to this thickness, this portion will tend to greatly deform and break. In addition, even in a case of a part being thick, since the thick portion will hardly deform, other portions will tend to deform relatively. In other words, in the case of the thickness not being uniform, the relatively thin portion will tend to break. On the other hand, it is possible to prevent local deformation by decreasing the thickness difference as in the tire 1 of the present embodiment, and thus achieve an improvement in durability.

(2) In the tire 1 according to the present invention, the tire-radial direction length H1 from the rim base line BL until the surface 13C of the tread 13 is at least three times the tire-radial direction length H2 from the rim base line BL to the tire- radial direction outside end 22A of the bead filler 22. In this way, even in a tire in which the tire cross-sectional height H1 is relatively large in relation to the tire-radial direction length H2 from the rim base line Bl to the tire-radial direction outside end 22A of the bead filler 22, so long as adopting the configuration of the present invention, it will be possible to suppress local deformation from occurring in the vicinity of the rim mounting part, and improve the run-flat durability.

(3) The tire 1 may further include the carcass ply 23 bridged between the pair of beads 11, in which the rim strip rubber 32, and the sidewall rubber 30 arranged at the outer side in the tire-radial direction of the rim strip rubber 32 are arranged to the outer side in the tire-width direction of the carcass ply 23 of the bead 11 and sidewall 12, and the tire-radial direction outside end 32A of the rim strip rubber 32 is arranged more to the outer side in the tire-radial direction than the tire-radial direction outside end 22A of the bead filler 22. It is thereby possible to more effectively suppress local deformation from occurring in the vicinity of the rim mounting part, and further improve the run-flat durability.

It should be noted that the tire of the present invention can be adopted as various types of tires such as of a car, light truck, truck or bus; however, it is particularly suitable as a tire for a car. Thereamong, the highest effect is obtained in a run-flat tire for SUVs having a large tire cross-sectional height. It should be noted that the present invention is not to be limited to the above-mentioned embodiment but is instead defined by the appended claims.

### EXPLANATION OF REFERENCE NUMERALS

- 1: tire
- 11: bead
- 12: sidewall
- 13: tread
- 21: bead core
- 22: bead filler
- 22A: tire-radial direction outside end
- 22B: tire-radial direction inside end
- 23: carcass ply
- 231: first carcass ply
- 232: second carcass ply
- 24: ply main body
- 25: ply folding part
- 26: steel belt
- 26A: tire-width direction outside end
- 27: cap ply
- 28: tread rubber
- 29: inner liner
- 30: sidewall rubber
- 31: chamfer
- 32: rim strip rubber
- 32A: tire-radial direction outside end
- 33: rim protector
- 33A: apex part
- 50: reinforcement rubber layer
- 50A: tire-radial direction outside end
- 50B: tire-radial direction inside end

## Claims

1. A run-flat tire (1) comprising:
a pair of beads (11);
a pair of sidewalls (12) extending from each of the pair of beads (11) to an outer side in a tire-radial direction;
a tread (13) disposed between the pair of sidewalls (12); and
a reinforcement rubber layer (50) disposed at the sidewall (12);
wherein the bead (11) includes a bead core (21) and a bead filler (22) extending to an outer side in the tire-radial direction of the bead core (21),
wherein part of the reinforcement rubber layer (50) is disposed at an inner side in a tire-width direction of the bead filler (22),
wherein, in a tire-width direction cross-sectional view, a tire-radial direction length (Hb) from a tire-radial direction outside end (22A) of the bead filler (22) until a tire-radial direction inside end (50B) of the reinforcement rubber layer (50) is at least 70% of a tire-radial direction length (Ha) from the tire-radial direction outside end (22A) of the bead filler (22) until the tire-radial direction inside end (22B) of the bead filler, and a variation range of a total thickness summing a thickness of the bead filler (22) and wherein a length (H1) in a tire radial direction from a rim base line (BL) until a surface of the tread (13) is at least three times a tire-radial direction length (H2) from the rim base line (BL) until the tire-radial direction outside end (22A) of the bead filler (22), the run-flat tire being **characterised in that** a thickness of the reinforcement rubber layer (50), within a range from the tire-radial direction outside end (22A) of the bead filler (22) to the tire-radial direction inside end (50B) of the reinforcement rubber layer (50) is within 10%,
wherein the thickness is the member penetrating distance in a direction orthogonal to the tire-width direction inside surface of the reinforcement rubber layer (50), in the tire-width direction cross-sectional view.

2. The run-flat tire (1) according to claim 1, further comprising a carcass ply (23) bridged between the pair of beads (11),
wherein a rim strip rubber (32) and a sidewall rubber (30) arranged at an outer side in the tire-radial direction of the rim strip rubber (32) are disposed at an outer side in the tire-width direction of the carcass ply (23) in the bead (11) and the sidewall (12), and
wherein a tire-radial direction outside end (32A) of the rim strip rubber (32) is disposed more to an outer side in the tire-radial direction than the tire-radial direction outside end (22A) of the bead filler (22).

3. The run-flat tire (1) according to claim 1 or 2, wherein the hardness of the bead filler (22) is 1.2 to 2.3 times the hardness of the sidewall rubber (30), and
wherein the hardness of the rubber is a value measured by a type-A durometer based on JIS K6253 in a 23°C atmosphere.

4. The run-flat tire (1) according to any one of claims 1 to 3, wherein the hardness of the reinforcement rubber layer (50) is 1.1 to 1.9 times the hardness of the sidewall rubber (30), and
wherein the hardness of the rubber is a value measured by a type-A durometer based on JIS K6253 in a 23°C atmosphere.

5. The run-flat tire (1) according to any one of claims 1 to 4, wherein the hardness of bead filler is within ±20% of the hardness of the reinforcement rubber layer (50), and
wherein the hardness of the rubber is a value measured by a type-A durometer based on JIS K6253 in a 23°C atmosphere.

## Patentansprüche

1. Notlaufreifen (1), aufweisend:
ein Paar Wülste (11);
ein Paar Seitenwände (12), die sich von jedem des Paars Wülste (11) in einer Reifenradialrichtung zu einer Außenseite erstrecken;
eine Lauffläche (13), die zwischen dem Paar Seitenwände (12) angeordnet ist; und
eine Gummi-Versteifungsschicht (50), die an der Seitenwand (12) angeordnet ist;
wobei der Wulst (11) einen Wulstkern (21) und eine Wulstfüllung (22), die sich in der Reifenradialrichtung des Wulstkerns (21) zu einer Außenseite erstreckt, aufweist;
wobei ein Teil der Gummi-Versteifungsschicht (50) in einer Reifenbreitenrichtung der Wulstfüllung (22) an einer Innenseite angeordnet ist,
wobei in einer Querschnittsansicht in Reifenbreitenrichtung eine Reifenradialrichtungslänge (Hb) von einem äußeren Ende (22A) in Reifenradialrichtung der Wulstfüllung (22) bis zu einem inneren Ende (50B) in Reifenradialrichtung der Gummi-Versteifungsschicht (50) zumindest 70% einer Reifenradialrichtungslänge (Ha) von dem äußeren Ende (22A) in Reifenradialrichtung der Wulstfüllung (22) bis zu dem inneren Ende (22B) in Reifenradialrichtung der Wulstfüllung beträgt, und eine Variationsspanne einer Gesamtdicke, die eine Dicke der Wulstfüllung (22) summiert, und wobei eine Länge (H1) in einer Reifenradialrichtung von einer Felgenbettlinie (BL) bis zu einer Oberfläche der Lauffläche (13) zumindest das Dreifache einer Reifenradialrichtungslänge (H2) von der Felgenbettlinie (BL) bis zum äußeren Ende (22A) in Reifenradialrichtung der Wulstfüllung (22) beträgt,
wobei der Notlaufreifen **dadurch gekennzeichnet ist, dass**
eine Dicke der Gummi-Versteifungsschicht (50) innerhalb eines Bereichs von dem äußeren Ende (22A) in Reifenradialrichtung der Wulstfüllung (22) bis zum inneren Ende (50B) in Reifenradialrichtung der Gummi-Versteifungsschicht (50) innerhalb von 10 % liegt;
wobei die Dicke die Eindringstrecke des Elements in einer Richtung orthogonal zu der Reifenbreitenrichtungsinnenoberfläche der Gummi-Versteifungsschicht (50) in einer Querschnittsansicht in Reifenbreitenrichtung ist.

2. Notlaufreifen (1) nach Anspruch 1, ferner aufweisend eine Karkassenlage (23), die das Paar von Wulsten (11) überspannt,
wobei ein Felgenstranggummi (32) und ein Seitenwandgummi (30), die an einer Außenseite in Reifenradialrichtung des Felgenstranggummis (32) angeordnet sind, an einer Außenseite in Reifenbreitenrichtung der Karkassenlage (23) in dem Wulst (11) und der Seitenwand (12) angeordnet sind, und
wobei ein äußeres Ende (32A) in Reifenradialrichtung des Felgenstranggummis (32) näher an einer Außenseite in Reifenradialrichtung angeordnet ist als das äußere Ende (22A) in Reifenradialrichtung der Wulstfüllung (22).

3. Notlaufreifen (1) nach Anspruch 1 oder 2, wobei die Härte der Wulstfüllung (22) das 1,2-fache bis 2,3-fache der Härte des Seitenwandgummis (30) beträgt, und
wobei die Härte des Gummis ein Wert ist, der mit einem Typ-A-Durometer auf Grundlage der JIS K6253 in einer Atmosphäre von 23°C gemessen wird.

4. Notlaufreifen (1) nach einem der Ansprüche 1 bis 3, wobei die Härte der Gummi-Versteifungsschicht (50) das 1,1-fache bis 1,9-fache der Härte des Seitenwandgummis (30) beträgt, und
wobei die Härte des Gummis ein Wert ist, der mit einem Typ-A-Durometer auf Grundlage der JIS K6253 in einer Atmosphäre von 23°C gemessen wird.

5. Notlaufreifen (1) nach einem der Ansprüche 1 bis 4, wobei die Härte der Wulstfüllung innerhalb von ± 20% der Härte der Gummi-Versteifungsschicht (50) liegt, und
wobei die Härte des Gummis ein Wert ist, der mit einem Typ-A-Durometer auf Grundlage der JIS K6253 in einer Atmosphäre von 23°C gemessen wird.

## Revendications

1. Pneu à roulage à plat (1) comprenant :
une paire de talons (11) ;
une paire de parois latérales (12) s'étendant à partir de chacun de la paire de talons (11) vers un côté externe dans un sens radial du pneu ;
une bande de roulement (13) disposée entre la paire de parois latérales (12) ; et
une couche de caoutchouc de renforcement (50) disposée au niveau de la paroi latérale (12) ;
dans lequel le talon (11) comprend une tringle (21) de talon et un rembourrage (22) de talon s'étendant vers un côté externe, dans le sens radial du pneu, de la tringle (21) de talon,
dans lequel une partie de la couche de caoutchouc de renforcement (50) est disposée au niveau d'un côté interne, dans un sens transversal du pneu, du rembourrage (22) de talon,
dans lequel, dans une vue en coupe transversale dans le sens transversal du pneu, une longueur (Hb), dans le sens radial du pneu, depuis une extrémité extérieure (22A), dans le sens radial du pneu, du rembourrage (22) de talon jusqu'à une extrémité intérieure (50B), dans le sens radial du pneu, de la couche de caoutchouc de renforcement (50), est d'au moins 70 % d'une longueur (Ha), dans le sens radial du pneu, depuis l'extrémité extérieure (22A), dans le sens radial du pneu, du rembourrage (22) de talon jusqu'à l'extrémité intérieure (22B), dans le sens radial du pneu, du rembourrage de talon, et une plage de variation d'une épaisseur totale additionnant une épaisseur du rembourrage (22) de talon et
dans lequel une longueur (H1), dans un sens radial du pneu, depuis une ligne de base (BL) de jante jusqu'à une surface de la bande de roulement (13) est d'au moins trois fois une longueur (H2), dans un sens radial du pneu, depuis la ligne de base (BL) de jante jusqu'à l'extrémité extérieure (22A), dans le sens radial du pneu, du rembourrage (22) de talon,
le pneu à roulage à plat étant **caractérisé en ce que** une épaisseur de la couche de caoutchouc de renforcement (50), dans une plage allant depuis l'extrémité extérieure (22A), dans le sens radial du pneu, du rembourrage de talon (22) jusqu'à l'extrémité intérieure (50B), dans le sens radial du pneu, de la couche de caoutchouc de renforcement (50), est comprise dans le 10 %,
dans lequel l'épaisseur est la distance de pénétration d'un élément dans un sens orthogonal à la surface intérieure, dans le sens transversal du pneu, de la couche de caoutchouc de renforcement (50), dans la vue en coupe transversale dans le sens transversal du pneu.

2. Le pneu à roulage à plat (1) selon la revendication 1, comprenant en outre une toile de pneu (23) s'étendant entre la paire de talons (11),
dans lequel un caoutchouc protecteur de jante (32), et un caoutchouc (30) de paroi latérale agencé au niveau d'un côté externe, dans le sens radial du pneu, du caoutchouc protecteur de jante (32), sont disposés au niveau d'un côté externe, dans le sens transversal du pneu, de la toile de pneu (23) dans le talon (11) et la paroi latérale (12), et
dans lequel une extrémité extérieure (32A), dans le sens radial du pneu, du caoutchouc protecteur de jante (32) est disposée plus vers un côté externe, dans le sens radial du pneu, que l'extrémité extérieure (22A), dans le sens radial du pneu, du rembourrage (22) de talon.

3. Le pneu à roulage à plat (1) selon les revendications 1 ou 2, dans lequel la dureté du rembourrage (22) de talon est comprise entre 1,2 et 2,3 fois la dureté du caoutchouc (30) de paroi latéral, et
dans lequel la dureté du caoutchouc est une valeur mesurée par un duromètre de type A, se basant sur JIS K6253 dans une atmosphère à 23 °C.

4. Le pneu à roulage à plat (1) selon l'une quelconque des revendications 1 à 3, dans lequel la dureté de la couche de caoutchouc de renforcement (50) est comprise entre 1,1 et 1,9 fois la dureté du caoutchouc (30) de paroi latérale, et
dans lequel la dureté du caoutchouc est une valeur mesurée par un duromètre de type A, se basant sur JIS K6253 dans une atmosphère à 23 °C.

5. Le pneu à roulage à plat (1) selon l'une quelconque des revendications 1 à 4, dans lequel la dureté du rembourrage de talon est comprise dans ±20 % de la dureté de la couche de caoutchouc de renforcement (50), et
dans lequel la dureté du caoutchouc est une valeur mesurée par un duromètre de type A, se basant sur JIS K6253 dans une atmosphère à 23 °C.
